# EUROPEAN PATENT SPECIFICATION

(11) **EP 0 786 949 B1**
(45) Date of publication and mention of the grant of the patent: **29.10.2003**
(21) Application number: 95928691.5
(22) Date of filing: 04.08.1995
(51) Int. Cl.: A23L 1/40

(54) **DEHYDRATED PEA SOUP AND METHOD OF MAKING THE SAME**
DEHYDRATISIERTE ERBSENSUPPE UND VERFAHREN ZU IHRER HERSTELLUNG
SOUPE AUX POIS DESHYDRATEE ET SON PROCEDE DE PRODUCTION

(30) Priority: 21.11.1994 US 343703
(43) Date of publication of application: 06.08.1997
(73) Proprietor: Sterner, Mark H., Riverside California 92505 (US); Sterner, Mark M., Roseburg Oregon 97470 (US); Zane, Ronald S. O., Riverside California 92505 (US)
(72) Inventor: Sterner, Mark H., Riverside California 92505 (US); Sterner, Mark M., Roseburg Oregon 97470 (US); Zane, Ronald S. O., Riverside California 92505 (US)
(74) Representative: Maury, Richard Philip
(86) International application number: US9509632
(87) International publication number: WO96015686

(56) References cited:
- US-A- 1 071 312
- US-A- 2 220 880
- US-A- 4 676 990
- US-A- 4 871 567
- US-A- 5 213 831

## Description

### Field of the Invention

The present invention relates generally to food products, and more particularly to a method for producing a dried pea flake that will form an instantly reconstitutable food product having the color, appearance, texture and consistency of conventionally prepared pea soup.

### Background of the Invention

As is well known, pea soup is standard fare in many households and institutions. Traditionally, split pea soup is formed by boiling peas with various spices in large quantities of water for approximately two to three hours. Though canned pea soup is also available, the bulk, weight, and cost associated therewith makes it prohibitive for use in the food service industries.

In view of the traditional method of preparing pea soup being time consuming and canned pea soup being costly and difficult to store, there has been developed in the prior art reconstitutable pea soup which may be prepared rapidly, is less costly, and easier to store due to its reduced bulk and weight. Currently, there are two well-known methods of producing a reconstitutable pea soup. In the first method, the peas are cooked, dried, and subsequently milled to a reconstitutable powder. However, one of the major problems associated with this particular method is the agglomeration which occurs when water is added to the powder. In this respect, the addition of water to the pea powder typically results in the formation of balls of pea powder, the middles of which are impervious to water. As such, constant stirring and mixing is required to achieve the proper transition of the pea powder into solution. A second major problem associated with this method is that the texture of the pea powder is typically not smooth when the water is added thereto. In this respect, despite the constant stirring and mixing, small lumps of powder typically remain within the solution, thus causing the resultant product to have a sandy mouth feel. The second widely practiced method is a drum-drying method wherein a pea slurry is prepared and cooked with spices. After cooking, the slurry is drum dried into flakes on a conventional drum dryer. However, this particular process is extremely costly, thus making it highly uneconomical for mass commercialization. The present invention is intended to alleviate the deficiencies associated with prior art methods of making dehydrated pea soup by providing a system and method of processing a comestible leguminous product (i.e., peas) into a quick-cooking and instantly reconstitutable pea soup product.

### Summary of the Invention

In accordance with the present invention, there is provided a method for forming a dehydrated leguminous food product for reconstitution into a ready-to-eat food product. The method comprises the step of inspecting, de-stoning, and cleaning the food product to remove unwanted material. Thereafter, the food product is washed to remove dirt.

After being washed, the food product is tempered to allow moisture to equilibrate throughout the same. The tempering is preferably accomplished by immersing the food product in water for approximately three hours, with the immersion time being sufficient to allow a portion of the water to be absorbed into the food product. Thereafter, the excess water is drained from the food product. Subsequent to the drainage of the water therefrom, the food product is allowed to stand for approximately three hours, with the standing time to be sufficient to allow moisture to equilibrate throughout the food product. Upon the elapse of the standing time, the food product has a moisture content of approximately 30% to 60%, and preferably about 44%.

After being tempered, the food product is cooked in a low-pressure steam environment which is between atmospheric pressure and approximately 9 PSIG. The cooking of the food product preferably occurs in a rotating steam vessel which rotates the food product so that the same is constantly tumbled and evenly exposed to the injected steam. In the preferred embodiment, the food product is cooked in a continuous steam cooker, though the same may alternatively be cooked within a rotary steam cooker. The cooking time is sufficient to soften the food product, and is approximately ten to twenty minutes. Since increased pressure shortens the cooking time, the cooking time is approximately 20 minutes when the food product is cooked at ambient pressure and approximately ten minutes when the food product is cooked at 9 PSIG.

After being cooked, the food product is then rolled in a roller mill to facilitate the flaking thereof. In the preferred rolling operation, the food product is smoothly crushed by passing the same between at least one pair of rolls such that it is flattened to a thickness of between 0.004 inches and 0.200 inches, and preferably about 0.004 inches.

After being rolled, the food product is dehydrated by passing the same into an atmospheric dryer. The drying of the food product may take place in a sectionally controlled oven in which humidity and temperature can be carefully regulated from one zone to another. Subsequent to being dehydrated, the food product has a moisture content of approximately 4% to 14%, and preferably about 10%.

Upon the completion of the dehydrating step, nonuniform pieces of the food product are discarded, with the remainder of the food product being broken up to a desired size by passing the same through a screen. After passing through the screen, the food product preferably has a particle size of approximately 1/8 inch to 1/2 inch.

The present method may further comprise the step of adding flavoring to the food product either prior or subsequent to the dehydration thereof. In this respect, prior to the dehydration of the food product, the flavoring may be added thereto during the cooking thereof or alternatively during the rolling thereof.

### Brief Description of the Drawings

These, as well as other features of the present invention, will become more apparent upon reference to the drawings wherein:
Figure 1 is a flow chart illustrating the sequence of operations performed in the practice of the preferred method of the present invention;
Figure 2 is a front elevational view of a rotary steam cooker which may be used in the practice of the method of the present invention; and
Figure 3 is a partial cross-sectional view of a continuous screw steam cooker which may be used in the practice of the method of the present invention.

### Detailed Description of the Preferred Embodiment

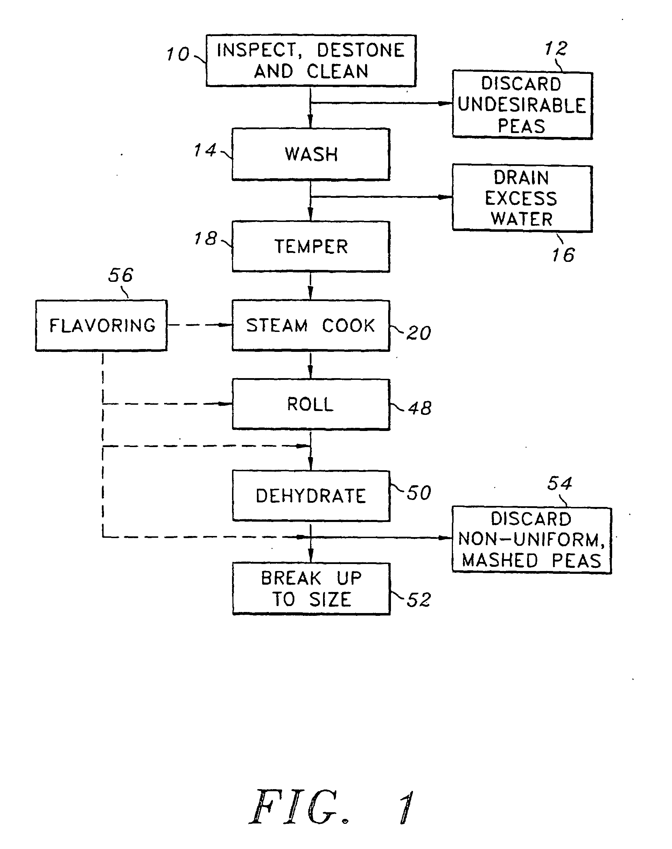

The process for preparing the dehydrated pea soup is generally illustrated in Figure 1 which depicts the presently preferred embodiment of the present invention.

The preferred method of the present invention comprises the steps of inspecting and cleaning, washing, tempering, steam cooking, rolling, dehydrating, and breaking up the legume (i.e., pea) product to a desired size. Preferably, the additional step of mixing flavoring to the pea product is also provided. The pea product produced by the present method forms an instantly reconstitutable food product having the color, appearance, texture, aroma, and consistency of conventionally prepared pea soup.

As produced, the dehydrated pea product will have a moisture content of approximately 4% to 14%, with the preferred moisture content being approximately 10%. The present method may be practiced upon various legumes, such as whole peas, split peas, and pea chips. The preferred legumes comprise green or yellow split peas. However, those skilled in the art will recognize that the present method need not be limited to these specific types of legumes.

Referring now to Figure 1, the following discussion of the individual steps of the present method will be useful in understanding the subject invention.

### INSPECTING, DE-STONING AND CLEANING

The initial inspection, de-stoning, and cleaning 10 of the peas to remove unwanted material is carried out manually or automatically in accordance with known methods in the prior art. Undesirable or substandard peas are discarded 12.

### WASHING

Following inspection, de-stoning, and cleaning 10, the peas are washed 14 with water or any acceptable liquid capable of removing foreign material, such as dirt and pesticide. After washing, the peas are drained 16 and the excess water is discarded.

### TEMPERING

After being washed, the peas are immersed in water for a period of approximately one to six hours (and preferably about three hours) until they become approximately 130% to 160% of their original dry weight due to the absorption of water thereinto. The water is then drained, and the peas set aside and left to stand for approximately three hours to allow the moisture to equilibrate throughout the peas. Such period of equilibration is referred to as "tempering" 18. As a result of the tempering, the peas are somewhat rubbery throughout, whereas if they were not allowed to equilibrate, the cores thereof would still be hard. Although the peas do not have to be fully hydrated (i.e., contain as much moisture as possible), they must be at least partially hydrated and must be evenly equilibrated. Upon the elapse of the preferred three hour standing time, the peas have a moisture content of approximately 30% to 60%, with the moisture content preferably being approximately 44%. As those skilled in the art will recognize, various other legumes require different soaking and equilibration times.

### STEAMING

Upon the completion of the tempering 18, the peas are steam cooked 20 with direct injected live steam in a low-pressure steam environment which is between atmospheric pressure and approximately 9 PSIG. By maintaining this pressure within this relatively low range, the bright green color of the peas is retained and maintained. The cooking time of the peas is sufficient to soften the same, and is approximately ten minutes to twenty minutes, with the precise cooking time being dependent on the desired color, taste, and texture for the peas.

During the cooking process, the higher the pressure at which the peas are cooked, the shorter the cooking time. As such, when the peas are cooked at atmospheric or ambient pressure, the cooking time is approximately twenty minutes. Conversely, when the peas are cooked at approximately 9 PSIG, the cooking time is generally about ten minutes. Those skilled in the art will recognize that pressures and cooking times differing from those previously discussed may be optimal for some other types of legumes.

The peas are preferably placed in a rotating steam vessel to assure continuous contact of the peas to the steam at low to atmospheric pressure. In this respect, the rotating steam vessel rotates the peas so that the same are continuously being tumbled and evenly exposed to steam so as to facilitate the cooking of the peas equally. The cooking can also be accomplished by boiling the peas in water or exposing the peas to infrared heat sources, microwaves, etc.

The cooking of the peas is preferably accomplished through the utilization of a continuous screw steam cooker 22 as shown in Figure 3. The continuous screw steam cooker 22 is adapted to provide a steady output, and is used by placing the peas into a hopper 24 from which they are carried by a screw 26 through a housing 28 toward an outlet 30. Steam is supplied to the housing 28 through tubes 32 and contained therein by doors 34. The doors 34 provide access to the interior of the housing 28 for cleaning and maintenance.

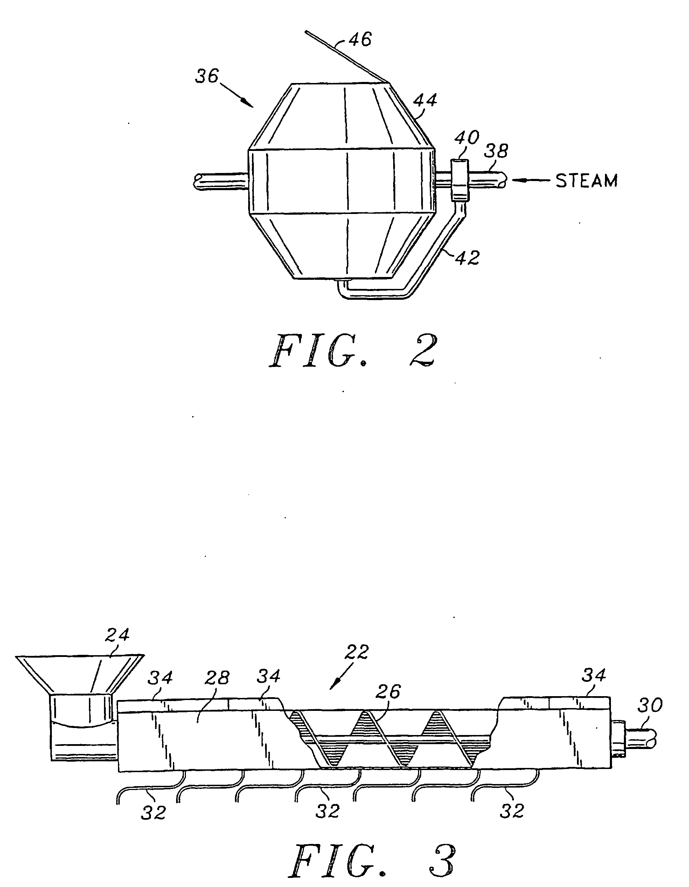

As an alternative to the continuous screw steam cooker 22, the peas may be cooked in a rotary steam cooker 36 as shown in Figure 2. The rotary steam cooker 36 typically has a capacity of approximately 14 cubic feet and rotates the peas contained therein to assure even and thorough cooking. Live steam is provided via an inlet line 38 from which it travels through a coupling 40 and tube 42 into a housing 44. A lid 46 provides a means for placing the peas into and removing the peas from the rotating steam cooker 36. The steam cooker 36 is typically alternatively supplied with steam and then rotated. Injection of steam into the housing 44 when the rotary steam cooker 36 is in the upright position (with the lid 46 uppermost) insures even distribution of the steam throughout the peas within the housing 44. Subsequent rotation of the rotary steam cooker 36 mixes the peas to further insure uniform heat distribution. As will be discussed in more detail below, seasonings, flavoring, or other ingredients may be added to the peas within either the continuous screw or rotary steam cookers 22, 36.

### ROLLING

Subsequent to being cooked in the aforementioned manner, the peas are flaked in roller mills by rollers to facilitate rapid dehydration and reconstitution. In the rolling process 48, the peas are smoothly crushed or moderately pressed between at least one pair of rolls. The rolling process 48 flattens the peas into flakes having a thickness of between 0.004 inches and 0.200 inches, with the preferred thickness being approximately 0.004 inches. During the rolling process 48, the peas may pass between one series of rollers or a multiple series of rollers. Importantly, the rolling process 48 produces a pea product that is smooth (rather than gritty), dries rapidly, rehydrates rapidly, and does not agglomerate when exposed to water during the rehydration process.

### DEHYDRATING

After undergoing the rolling process 48, the peas are then dehydrated 50. The dehydrating/drying of the peas (and in particular the flakes formed by the rolling process 48) is accomplished by the passage of the peas into an atmospheric dryer. As previously indicated, upon emerging from the atmospheric dryer, the peas have a moisture content of approximately 4% to 14%, and preferably approximately 10%. Those of ordinary skill in the art will recognize that the peas may alternatively be dehydrated/dried in various types of drying devices, including a sectionally controlled oven in which humidity and temperature can be carefully regulated from one zone to another.

Advantageously, the dehydration 50 of the peas enables the product, in its final form, to be easily stored and handled in a space-efficient manner, unlike canned pea products currently available.

### SIZING

Once the peas have been subjected to the aforementioned dehydration process 50, they are then preferably sized so as to have a substantially uniform shape and size for aesthetic and more uniform packaging density. In the sizing process 52, the peas are passed through a power sieve whereby large sized peas are reduced in size. The reduced sized peas pass through the sieve to have a uniform particle size which is preferably approximately 1/8 inch to 1/2 inch. Alternatively, the sieve may be sized to provide a smaller powder like consistency to the peas. Thereafter, the peas will be packaged for storage and/or shipping.

### MIXING

Optionally, a flavoring 56 may be mixed with the peas either prior to subsequent to the dehydration 50 thereof. The flavoring may comprise seasonings and/or other ingredients (e.g. parsley) which is added to the peas in desired quantities for purposes of minimizing flavor loss in the resultant pea product. As previously explained, the flavoring 56 may be added to the peas during the cooking process 20 by placing the same within the continuous screw or rotary steam cookers 22, 36. Alternatively, the flavoring 56 may be added to the peas during the rolling process 48 or immediately after the dehydration process 50. The flavoring 56 may be added so that the peas, upon reconstitution, will have a desired taste and/or texture. Advantageously, the mixing of the flavoring 56 into the peas helps create a resultant pea product that has consistently uniform flavor that does not vary significantly from batch to batch, unlike peas canned with seasonings in water.

The dehydrated pea product formed in accordance with the aforementioned method is reconstituted simply by adding water thereto. In particular, the pea product reconstitutes in hot water within approximately one minute, and reconstitutes in cold water in approximately fifteen minutes. Importantly, the reconstitution of the pea product occurs without constant stirring. Despite not being constantly stirred, the pea product does not agglomerate during reconstitution, but rather remains in suspension, thus resulting in a reconstituted pea product which is smooth and not gritty. The reconstituted pea product retains the natural green color of the peas and is microwavable. Importantly, the present method allows for the economical production of the dehydrated pea products which have a shelf life of at least one year prior to being reconstituted.

## Claims

1. A method for forming a dehydrated leguminous food product for reconstitution into a ready-to-eat food product, the method comprising the steps of:
a) tempering the food product sufficiently to allow moisture to equilibrate throughout the food product;
b) cooking the food product in a steam environment, the cooking time being sufficient to soften the food product;
c) rolling the steamed food product;
d) dehydrating the food product; and
e) lastly, passing the food product through a screen whereby the food product is reduced to a desired size.

2. The method as recited in Claim 1 wherein the step of tempering the food product comprises the steps of:
a) immersing the food product in water, the immersion time being sufficient to allow a portion of the water to be absorbed into the food product;
b) draining the excess water from the food product;
c) allowing the food product to stand, the standing time being sufficient to allow moisture to equilibrate throughout the food product.

3. The method as recited in Claim 2 wherein the food product is immersed in water until the food product becomes approximately 130% to 160% of its original dry weight.

4. The method as recited in Claim 3 wherein the immersion time of the food product in the water is approximately one hour to six hours.

5. The method as recited in Claim 4 wherein the immersion time of the food product in the water is approximately three hours.

6. The method as recited in Claim 2 wherein the standing time of the food product subsequent to the drainage of the water therefrom is approximately three hours.

7. The method as recited in Claim 2 wherein the food product has a moisture content of approximately 30% to 60% upon the elapse of the standing time.

8. The method as recited in Claim 7 wherein the food product has a moisture content of approximately 44% upon the elapse of the standing time.

9. The method as recited in Claim 1 wherein the step of cooking the food product comprises cooking the food product within a continuous screw steam cooker.

10. The method as recited in Claim 1 wherein the step of cooking the food product comprises cooking the food product within a rotary steam cooker.

## Patentansprüche

1. Verfahren zur Herstellung eines dehydratisierten Hülsenlebensmittelproduktes für ein Auflösen zu einem eßfertigen Lebensmittelprodukt, wobei das Verfahren die folgenden Schritte aufweist:
a) Verdünnen des Lebensmittelproduktes in ausreichender Weise, damit die Feuchtigkeit durchgängig im Lebensmittelprodukt ins Gleichgewicht gebracht werden kann;
b) Kochen des Lebensmittelproduktes in einer Dampfumgebung, wobei die Kochzeit ausreichend ist, um das Lebensmittelprodukt zu erweichen;
c) Rollen des gedämpften Lebensmittelproduktes;
d) Dehydratisieren des Lebensmittelproduktes; und
e) schließlich Führen des Lebensmittelproduktes durch ein Sieb, wobei das Lebensmittelprodukt auf eine gewünschte Größe reduziert wird.

2. Verfahren nach Anspruch 1, bei dem der Schritt des Verdünnens des Lebensmittelproduktes die folgenden Schritte aufweist:
a) Tauchen des Lebensmittelproduktes in Wasser, wobei die Tauchzeit ausreichend ist, damit ein Teil des Wassers im Lebensmittelprodukt aufgenommen werden kann;
b) Ablassen des überschüssigen Wassers aus dem Lebensmittelprodukt;
c) Zulassen, daß das Lebensmittelprodukt verweilt, wobei die Verweilzeit ausreichend ist, damit die Feuchtigkeit durchgängig im Lebensmittelprodukt ins Gleichsgewicht gebracht werden kann.

3. Verfahren nach Anspruch 2, bei dem das Lebensmittelprodukt in Wasser getaucht wird, bis das Lebensmittelprodukt annähernd 130% bis 160% seines ursprünglichen Trockengewichtes erreicht.

4. Verfahren nach Anspruch 3, bei dem die Tauchzeit des Lebensmittelproduktes in Wasser annähernd eine Stunde bis sechs Stunden beträgt.

5. Verfahren nach Anspruch 4, bei dem die Tauchzeit des Lebensmittelproduktes in Wasser annähernd drei Stunden beträgt.

6. Verfahren nach Anspruch 2, bei dem die Verweilzeit des Lebensmittelproduktes anschließend an das Ablassen des Wassers daraus annähernd drei Stunden beträgt.

7. Verfahren nach Anspruch 2, bei dem das Lebensmittelprodukt einen Feuchtigkeitsgehalt von annähernd 30% bis 60% bei Ablauf der Verweilzeit aufweist.

8. Verfahren nach Anspruch 7, bei dem das Lebensmittelprodukt einen Feuchtigkeitsgehalt von annähernd 44% bei Ablauf der Verweilzeit aufweist.

9. Verfahren nach Anspruch 1, bei dem der Schritt des Kochens des Lebensmittelproduktes das Kochen des Lebensmittelproduktes innerhalb eines kontinuierlichen Schneckendampfkochers aufweist.

10. Verfahren nach Anspruch 1, bei dem der Schritt des Kochens des Lebensmittelproduktes das Kochen des Lebensmittelproduktes innerhalb eines rotierenden Dampfkochers aufweist.

## Revendications

1. Procédé de production d'un produit alimentaire à base de légumes déshydratés pour reconstituer un produit alimentaire prêt à la consommation, le procédé comprenant les étapes ci-dessous:
a) revenu suffisant du produit alimentaire pour permettre l'équilibrage de l'humidité à travers le produit alimentaire;
b) cuisson du produit alimentaire dans un environnement de vapeur, le temps de cuisson étant suffisant pour ramollir le produit alimentaire;
c) roulage du produit alimentaire cuit à la vapeur;
d) déshydratation du produit alimentaire; et
e) passage final du produit alimentaire à travers un tamis, le produit alimentaire étant ainsi réduit à une taille voulue.

2. Procédé selon la revendication 1, dans lequel l'étape de revenu du produit alimentaire comprend les étapes ci-dessous:
a) immersion du produit alimentaire dans de l'eau, le temps d'immersion étant suffisant pour permettre l'absorption d'une partie de l'eau dans le produit alimentaire;
b) drainage de l'eau excédentaire du produit alimentaire;
c) mise au repos du produit alimentateur, le temps de repos étant suffisant pour permettre l'équilibrage de l'humidité à travers le produit alimentaire.

3. Procédé selon la revendication 2, dans lequel le produit alimentaire est immergé dans de l'eau jusqu'à ce que le produit alimentaire représente environ 130% à 160% de son poids à sec d'origine.

4. Procédé selon la revendication 3, dans lequel le temps d'immersion du produit alimentaire dans l'eau et compris entre environ une heure et six heures.

5. Procédé selon la revendication 4, dans lequel le temps d'immersion du produit alimentaire dans l'eau correspond à environ trois heures.

6. Procédé selon la revendication 2, dans lequel le temps de repos du produit alimentaire après le drainage de l'eau correspond à environ trois heures.

7. Procédé selon la revendication 2, dans lequel le produit alimentaire a une teneur en humidité de l'ordre de 30% à 60% après l'écoulement du temps de repos.

8. Procédé selon la revendication 7, dans lequel le produit alimentaire a une teneur en humidité de l'ordre de 44% après l'écoulement du temps de repos.

9. Procédé selon la revendication 1, dans lequel l'étape de cuisson du produit alimentaire comprend la cuisson du produit alimentaire dans un cuiseur à vapeur à vis sans fin.

10. Procédé selon la revendication 1, dans lequel l'étape de cuisson du produit alimentaire comprend la cuisson du produit alimentaire dans un cuiseur à vapeur rotatif.
